# EUROPÄISCHE PATENTANMELDUNG

(11) **EP 3 763 960 A1**
(43) Veröffentlichungstag der Anmeldung: **13.01.2021**
(21) Anmeldenummer: 20184987.4
(22) Anmeldetag: 09.07.2020
(51) Int. Cl.: F16D 23/04

(54) **SYNCHRONISIERUNGSEINHEIT FÜR EIN SCHALTGETRIEBE**

(30) Priorität: 11.07.2019 DE 102019118829
(71) Anmelder: HOERBIGER Antriebstechnik Holding GmbH, 86956 Schongau (DE)
(72) Erfinder: Völk, Wolfgang, 86956 Schongau (DE); Dempfle, Andreas, 86956 Schongau (DE); Binder, Jürgen, 86956 Schongau (DE); Fürguth, Werner, 86956 Schongau (DE); Fischer, Patrick, 86956 Schongau (DE)
(74) Vertreter: Prinz & Partner mbB

(57) **Zusammenfassung**

Es wird eine Synchronisierungseinheit (10) für ein Schaltgetriebe beschrieben, die einen ersten Synchronring (30) und einen zweiten Synchronring (34) umfasst. Ferner sind ein von den Synchronringen (30, 34) separater, erster Sperrring (32), der dem ersten Synchronring (30) zugeordnet ist, und ein von den Synchronringen (30, 34) separater, zweiter Sperrring (36), der dem zweiten Synchronring (34) zugeordnet ist, vorgesehen. Dabei sind der erste Synchronring (30), der zweite Synchronring (34), der erste Sperrring (32) und der zweite Sperrring (36) koaxial und um eine Mittelachse (20) der Synchronisierungseinheit (10) drehbar angeordnet. Zudem ist der erste Sperrring (32) in Axialrichtung mit dem zweiten Sperrring (36) gekoppelt.

## Beschreibung

Die Erfindung betrifft eine Synchronisierungseinheit für ein Schaltgetriebe, mit einem ersten Synchronring und einem zweiten Synchronring.

Solche Synchronisierungseinheiten sind aus dem Stand der Technik bekannt und unterliegen einem ständigen Kostendruck, sodass allgemein angestrebt wird, diese einfach und kostengünstig aufzubauen.

Die Vereinfachung des Aufbaus von Synchronisierungseinheiten findet jedoch dahingehend eine Grenze, dass Schwingungen innerhalb der Synchronisierungseinheiten vermieden werden sollen. Dies ist insbesondere bei sehr hohen Drehzahlen von Bedeutung. Bauteilschwingungen innerhalb der Synchronisierungseinheiten führen einerseits zur einer unerwünschten Geräuschentwicklung und andererseits zu unerwünschten Beschädigungen von Bauteilen der Synchronisierungseinheit.

Ein weiteres Ziel bei der Entwicklung von Synchronisierungseinheiten ist üblicherweise ein geringer Bauraumbedarf, also ein kompakter Aufbau der Synchronisieru ngseinheit.

Vor diesem Hintergrund ist es die Aufgabe der Erfindung, eine verbesserte Synchronisierungseinheit anzugeben. Diese soll insbesondere einfach und kostengünstig aufgebaut sein, unerwünschte Schwingungen vermeiden und einen geringen Bauraumbedarf aufweisen.

Die Aufgabe wir durch eine Synchronisierungseinheit der eingangs genannten Art gelöst, die einen von den Synchronringen separaten, ersten Sperrring, der dem ersten Synchronring zugeordnet ist, und einen von den Synchronringen separaten, zweiten Sperrring umfasst, der dem zweiten Synchronring zugeordnet ist, wobei der erste Synchronring, der zweite Synchronring, der erste Sperrring und der zweite Sperrring koaxial und um eine Mittelachse der Synchronisierungseinheit drehbar angeordnet sind und der erste Sperrring in Axialrichtung mit dem zweiten Sperrring gekoppelt ist. Dabei ist der erste Sperrring derart ausgebildet, dass er eine axiale Verschiebung der Schiebemuffe in Richtung des ersten Synchronrings sperrt, solange diese mit einer Kraft betätigt wird, die kleiner ist als eine Betätigungsgrenzkraft. Erst beim Überschreiten der Betätigungsgrenzkraft wird der erste Sperrring mittels der Schiebemuffe derart verdreht, dass er eine axiale Verschiebung derselben in Richtung Synchronring freigibt. Gleiches gilt für eine Betätigung der Schiebemuffe in eine entgegengesetzte, in Richtung des zweiten Synchronrings orientierte Richtung. Mit anderen Worten wird die Schiebemuffe mittels der Sperrringe in der Neutralstellung gesichert. Unerwünschte Bewegungen der Schiebemuffe werden somit vermieden, was zur Reduktion unerwünschter Schwingungen innerhalb der Synchronisierungseinheit führt. Zudem werden auf diese Weise unerwünschte Schleppmomente reduziert.

Die Kopplung der Sperrringe in Axialrichtung bewirkt in diesem Zusammenhang, dass derjenige der Sperrringe, der dem aktuell nicht zu betätigenden Synchronring zugeordnet ist, bei einer Betätigung der Synchronisierungseinheit zuverlässig in seiner Lüftungsstellung gehalten wird. Anders ausgedrückt wird der zweite Sperrring bei einer Betätigung der Synchronisierungseinheit in Richtung des ersten Synchronrings auch in Richtung des ersten Synchronrings mit einer Kraft beaufschlagt. Somit wird der zweite Synchronring in seiner Lüftungsstellung gehalten. Gleiches gilt, wenn die Synchronisierungseinheit in Richtung des zweiten Synchronrings betätigt wird. Ferner verhindert die axiale Kopplung der Sperrringe, dass diese sich relativ zueinander bewegen. Auch auf diese Weise werden unerwünschte Schwingungen und Schleppmomente vermieden.

Jeder der Sperrringe kann ferner eine Vorsynchronisierungseinheit bilden. Ausgehend von einer Neutralstellung der Synchronisierungseinheit wird nämlich bei einer Betätigung der Schiebemuffe zunächst der der Betätigungsrichtung zugeordnete Synchronring über den jeweils zugeordneten Sperrring derart in Axialrichtung bewegt, dass er in Reibkontakt mit einem zugehörigen Reibkonusabschnitt eines zu schaltenden Kupplungskörpers oder Gangrads gelangt. Dieser Reibkontakt bewirkt, dass sich der Synchronring in seine sogenannte Sperrstellung oder Indexstellung verdreht. In dieser Stellung stehen sich die Zähne der Sperrverzahnung des Synchronrings und die Zähne der Schiebemuffenverzahnung in Axialrichtung zumindest abschnittsweise gegenüber. Vorzugsweise wird dabei die Betätigungsgrenzkraft derart eingestellt, dass sie erst überschritten wird, wenn der jeweils zu schaltende Synchronring diese Sperrstellung erreicht hat.

Dabei können die Sperrringe über zumindest eine vom ersten Sperrring in Richtung des zweiten Sperrrings abstehende Lasche und über zumindest eine vom zweiten Sperrring in Richtung des ersten Sperrrings abstehende Lasche gekoppelt sein. Dies stellt eine einfache und zuverlässige Kopplung der beiden Sperrringe dar. Zudem sind die Laschen vergleichsweise leicht im Gewicht. Das gilt insbesondere im Vergleich zum Gesamtgewicht des jeweiligen Sperrrings. Auf diese Weise kann im Betrieb der Synchronisierungseinheit der Einfluss der auf die Sperrringe wirkenden Fliehkräfte gering gehalten werden. Dies gilt vor allem vor dem Hintergrund, dass die Laschen umfangsmäßig nicht umlaufen und daher Unwuchten bilden können. Auf diese Weise wird eine zuverlässige Funktion der Synchronisierungseinheit unabhängig von der Drehzahl sichergestellt. Insbesondere funktioniert somit die Synchronisierungseinheit bei vergleichsweise hohen Drehzahlen zuverlässig.

Vorzugsweise sind die Sperrringe über drei Laschenpaare miteinander gekoppelt. Diese sind bevorzugt gleichförmig am Umfang der Sperrringe verteilt, also mit einem Winkelabstand von im Wesentlichen 120° angeordnet. Dieser Aufbau ist gleichzeitig einfach und bewirkt eine zuverlässige Kopplung der Sperrringe.

Vorteilhafterweise stehen die Laschen im Wesentlichen in Axialrichtung vom jeweils zugeordneten Sperrring ab, wobei eine der Laschen eine Radialaufnahme aufweist und die andere der Laschen einen Radialvorsprung, wobei der Radialvorsprung in die Radialaufnahme eingreift. Es lassen sich so die beiden Sperrringe einfach und zuverlässig koppeln. Die Radialaufnahme kann dabei einen in Axialrichtung wirkenden Hinterschnitt bilden, in den der Radialvorsprung eingreift. Selbstverständlich stellt dabei der Radialvorsprung aus der Perspektive der Radialaufnahme auch einen in Axialrichtung wirkenden Hinterschnitt dar. Die Kopplung kann somit ohne zusätzliche Bauteile erfolgen. Ferner wird auf diese Weise eine einfache Montage erreicht. In diesem Zusammenhang können die Laschen in Radialrichtung mit einer gewissen Elastizität ausgestattet sein, sodass eine Kopplung der Sperrringe dadurch erfolgen kann, dass sie derart in Axialrichtung aufeinander zu bewegt werden, dass die Radialvorsprünge unter Ausnutzung dieser Elastizität in die jeweils zugeordneten Radialaufnahmen eingreifen. Das ist besonders einfach.

Bevorzugt sind bzw. ist die Radialaufnahme und/oder der Radialvorsprung in Umfangsrichtung betrachtet V-förmig. Solche Aufnahmen und Vorsprünge lassen sich mit standardmäßigen Maschinen und Werkzeugen einfach und präzise herstellen. Für den Fall, dass die Laschen aus einem Blech hergestellt sind, lassen sich V-förmige Aufnahmen und/oder Vorsprünge durch einen einfachen Umformvorgang herstellen. Dabei sind zwei Alternativen denkbar. In einer ersten Alternative können die V-förmigen Radialaufnahmen nach radial innen offen sein, sodass die V-förmigen Radialvorsprünge von radial innen in diese Radialaufnahmen eingreifen. Alternativ können die Radialaufnahmen auch nach radial außen offen sein. Die V-förmigen Radialvorsprünge greifen dann von radial außen in diese ein. Beide Varianten beanspruchen lediglich einen sehr geringen Bauraum, was insbesondere in Radialrichtung gilt. Zudem wird so erreicht, dass die beiden Sperrringe in einer vorgegebenen Axialposition zueinander gekoppelt sind.

Der erste Sperrring und der zweite Sperrring können als Stanzbiegeteile aus Blech gebildet sein. Stanzbiegeteile aus Blech lassen sich einfach und kostengünstig herstellen. Dies gilt insbesondere für hohe Stückzahlen. Ferner lassen sich bei Stanzbiegeteilen vorgegebene Toleranzen leicht einhalten.

Bevorzugt sind die Sperrringe dabei aus Federblech hergestellt. Dadurch lassen sich die oben genannten elastischen Eigenschaften besonders einfach und kostengünstig realisieren.

In einer Variante sind der erste Sperrring und der zweite Sperrring jeweils einstückig und/oder umfangsmäßig geschlossen. In diesem Zusammenhang kann ein einstückiger Sperrring auch als einteilig bezeichnet werden. Dadurch sind die Sperrringe vergleichsweise einfach herstellbar. Zudem wirken sich Fliehkräfte im Betrieb der Synchronisierungseinheiten nur geringfügig auf die Funktion des Sperrrings aus, wenn dieser umfangsmäßig geschlossen ist und somit nur eine geringe oder gar keine Unwucht besitzt.

Gemäß einer Ausführungsform weist jeder der Synchronringe einen Reibkonusabschnitt und einen Sperrverzahnungsabschnitt auf und jeder der Sperrringe umfasst einen Sperrverzahnungsabschnitt und einen Lagerabschnitt,
wobei der Sperrverzahnungsabschnitt des ersten Sperrrings in Axialrichtung dem Sperrverzahnungsabschnitt des ersten Synchronrings benachbart angeordnet ist und der Sperrverzahnungsabschnitt des zweiten Sperrrings in Axialrichtung dem Sperrverzahnungsabschnitt des zweiten Synchronrings benachbart angeordnet ist und/oder
wobei der Lagerabschnitt des ersten Sperrrings am ersten Synchronring anliegt und der Lagerabschnitt des zweiten Sperrrings am zweiten Synchronring anliegt.

Auf diese Weise ergibt sich eine kompakte Synchronisierungseinheit. Das gilt insbesondere hinsichtlich des radialen Bauraums. Durch die Anlage am jeweils zugeordneten Synchronring dienen die Sperrringe zudem der definierten Positionierung der Synchronringe innerhalb der Synchronisierungseinheit. Es werden somit unerwünschte Bewegungen der Synchronringe innerhalb der Synchronisierungseinheit und damit unerwünschte Schwingungen vermieden. In der Neutralstellung der Synchronisierungseinheiten werden so unerwünschte Schleppmomente reduziert.

Besonders bevorzugt ist es dabei, dass die Lagerabschnitte radial innenseitig an Koppelnocken oder Indexnocken der zugeordneten Synchronringe anliegen. Es lässt sich so eine besonders kompakte Synchronisierungseinheit realisieren.

Vorzugsweise greift der erste Sperrring in eine am ersten Synchronring vorgesehen Radialaufnahme ein und der zweite Sperrring in eine am zweiten Synchronring vorgesehen Radialaufnahme. Die Radialaufnahmen stellen jeweils in Axialrichtung wirkende Hinterschnitte dar, sodass mittels der zugeordneten Radialaufnahme der erste Sperrring in Axialrichtung zuverlässig am ersten Synchronring gehalten ist. Gleiches gilt für den zweiten Sperrring, der in Axialrichtung zuverlässig am zweiten Synchronring gehalten ist.

In einer bevorzugten Ausführungsform weist jeder Synchronring drei Radialaufnahmen auf, die vorzugsweise gleichmäßig an seinem Umfang verteilt sind. Alternativ dazu können auch sechs Radialaufnahmen vorgesehen sein. Auf diese Weise lassen sich die jeweils einander zugeordneten Synchronringe und Sperrringe zuverlässig miteinander koppeln. Ferner lässt sich durch die Anzahl der Aufnahmen auch das Schwingungsverhalten der Synchronisierungseinheit beeinflussen.

Dabei kann jeder der Sperrringe einen Radialvorsprung aufweisen und mittels des Radialvorsprungs in die jeweils zugeordnete Radialaufnahme eingreifen. Es ergibt sich damit eine zuverlässige Kopplung von einander zugeordneten Synchronringen und Sperrringen. Dabei springen die Radialvorsprünge vorzugsweise radial nach innen vor. Dies ermöglicht eine platzsparende Kopplung von Synchronringen und Sperrringen. Bevorzugt sind dabei die Radialvorsprünge als abgebogene Blechabschnitte ausgeführt, wodurch sie einfach und kostengünstig herstellbar sind.

Gemäß einer Variante sind die Radialaufnahmen jeweils durch einen vollständig oder segmentiert umlaufenden Synchronringbund gebildet. Die Radialaufnahmen sind dann zwischen dem Synchronringbund und dem zugeordneten Sperrverzahnungsabschnitt des Synchronrings gebildet. Vorzugsweise ist der Synchronringbund dabei als in Axialrichtung angeschobener Bereich des jeweiligen Reibkonusabschnitts ausgeführt. Derartige Synchronringbunde lassen sich besonders einfach herstellen.

Alternativ sind die Radialaufnahmen jeweils durch einen am zugeordneten Synchronring vorgesehenen Haltenocken gebildet. Die Radialaufnahmen sind dann zwischen dem Haltenocken und dem zugeordneten Sperrverzahnungsabschnitt des Synchronrings gebildet. Der Haltenocken kann dabei als radial nach außen gebogener Bereich des Reibkonusabschnitts ausgeführt sein. Für den Fall, dass der Synchronring aus Blech hergestellt ist, kann der Haltenocken als umgebogene Blechlasche ausgeführt sein.

Falls der Synchronringbund segmentiert ausgeführt ist oder die Radialaufnahmen durch Haltenocken gebildet sind, die ebenfalls nicht umfangsmäßig umlaufen, können die Sperrringe nach Art eines Bajonettverschlusses auf dem jeweils zugeordneten Synchronring montiert werden, indem der Sperrring in Axialrichtung auf den zugeordneten Synchronring aufgeschoben wird, wobei die Radialvorsprünge umfangsmäßig außerhalb der Haltenocken oder der Segmente des Synchronringbundes angeordnet sind, und dann derart verdreht wird, dass die Radialvorsprünge in Axialrichtung die Haltenocken hintergreifen. Eine solche Montage ist besonders einfach.

Zudem kann eine Nabe vorgesehen sein und in Neutralposition ein Positionierungsabschnitt jedes Sperrrings zur umfangsmäßigen Positionierung in eine Nabenaussparung eingreifen. Damit sind die Sperrringe in der Neutralposition der Synchronisierungseinheiten definiert an der Nabe gehalten. Auf diese Weise werden Relativbewegungen zwischen den Sperrringen und der Nabe vermieden, wodurch auch unerwünschte Schwingungen reduziert werden. Wenn zusätzlich die Sperrringe mit jeweils zugeordneten Synchronringen gekoppelt sind, ergibt sich auch eine Positionierung der Synchronringe relativ zur Nabe. Dies gilt insbesondere in Radialrichtung, sodass die Synchronringe über die jeweils zugeordneten Sperrringe an der Nabe zentriert sind. Dadurch werden unerwünschte Schwingungen der Synchronringe unterbunden.

Der Positionierungsabschnitt kann eine Federzunge umfassen, insbesondere wobei die Federzunge von radial Innen in die zugeordnete Nabenaussparung eingreift. Die Nabenaussparung weist also eine nach radial innen gerichtete Öffnung auf. Eine derartige Positionierung beansprucht einen vergleichsweise geringen Bauraum, insbesondere in Radialrichtung. Die Tatsache, dass der Positionierungsabschnitt als Federzunge ausgebildet ist, bewirkt, dass er unter Überwindung der ihm zugeordneten Federkraft auch aus der Nabenaussparung heraus bewegt werden kann. Auf diese Weise lässt sich über den Positionierungsabschnitt eine Kraft einstellen, die auf den Sperrring aufgebracht werden muss, um den Positionierungsabschnitt aus der Nabenaussparung herauszubewegen. Wenn die Sperrringe Vorsynchronisierungseinheiten darstellen, entspricht diese Kraft der Betätigungsgrenzkraft. Solange die Schiebemuffe also mit einer in Axialrichtung wirkenden Kraft betätigt wird, die geringer ist als die Betätigungsgrenzkraft, bleiben die Positionierungsabschnitte der Sperrringe in der Nabenaussparung. Dies entspricht einer Sperrposition der Sperrringe. Erst wenn die Betätigungsgrenzkraft überschritten wird, können durch ein Herausbewegen der Positionierungsabschnitte aus der Nabenaussparung die Sperrringe in eine Freigabestellung überführt werden.

Alternativ oder zusätzlich können an jedem Sperrring zwei Positionierungsabschnitte zur umfangsmäßigen Positionierung des Sperrrings in jeweils entgegengesetzte Drehrichtungen vorgesehen sein und die Positionierungsabschnitte in eine gemeinsame Nabenaussparung eingreifen. Die bereits hinsichtlich eines einzigen Positionierungsabschnitts erläuterten Vorteile und Effekte gelten somit für beide Drehrichtungen. Ferner ist es möglich, die Kraft, die dafür notwendig ist, die Positionierungsabschnitte aus der Nabenaussparung herauszubewegen, drehrichtungsabhängig einzustellen.

Ein Verfahren zur Betätigung einer erfindungsgemäßen Synchronisierungseinheit kann somit folgendermaßen ablaufen.

In einer Neutralstellung der Synchronisierungseinheit liegen Zähne der Sperrverzahnungsabschnitte der Sperrringe zumindest abschnittsweise axial vor Zähnen der Schiebemuffe. Mit anderen Worten sperren die Sperrringe eine Bewegung der Schiebemuffe in Axialrichtung.

Ausgehend hiervon kann eine Vorsynchronisierungsstellung eingenommen werden, in der die Schiebemuffe in Axialrichtung mit einer zunächst vergleichsweise geringen Kraft betätigt wird. Über eine Anlage der Zähne der Schiebemuffe an den Zähnen desjenigen Sperrrings, der dem zu schaltenden Gang zugeordnet ist, und über eine Anlage des Sperrrings am Synchronring, der dem zu schaltenden Gang zugeordnet ist, wird so ein Reibkonusabschnitt des Synchronrings mit einem Reibkonusabschnitt des zu schaltenden Gangrads in Reibkontakt gebracht. Dadurch wird der Synchronring in seine Sperrstellung verdreht. Die Sperrringe sperren dabei weiterhin eine Bewegung der Schiebemuffe in Axialrichtung.

Wird die Betätigungskraft der Schiebemuffe weiter erhöht, wird die oben als Betätigungsgrenzkraft bezeichnete Kraft erreicht. Dann wird der Sperrring derart stark in Axialrichtung durch die Schiebemuffe beaufschlagt, dass er sich relativ zur Schiebemuffe verdreht. Dann liegen die Zähne des Sperrrings in Zahnlücken der Zähne der Schiebemuffe. Diese Verdrehung wird dadurch ermöglicht, dass die Positionierungsabschnitte des Sperrrings aus der Nabenaussparung herausbewegt werden.

Um das Verdrehen des Sperrrings, also eine Bewegung desselben in Umfangsrichtung, mittels einer axialen Betätigung der Schiebemuffe zu erleichtern, können zumindest einige der Schiebemuffenzähne konvexe oder ballige Stirnflächen aufweisen. Somit kann eine Komponente der axialen Betätigungskraft in Umfangsrichtung orientiert werden. Zum selben Zweck kann alternativ oder zusätzlich vorgesehen sein, dass die Zähne der Sperrverzahnung des Sperrrings in dessen Sperrstellung gegenüber den Zähnen der Schiebemuffe außermittig angeordnet sind. Bei sich axial gegenüberliegenden Zähnen ist also eine umfangsmäßige Mitte eines Schiebemuffenzahns gegenüber einer umfangsmäßigen Mitte eines gegenüberliegenden Zahns des Sperrrings umfangsmäßig versetzt.

Die Zähne der Schiebemuffe können somit in Axialrichtung durch die Zahnlücken der Sperrverzahnungsabschnitte des Sperrrings hindurchgreifen.

Nachdem sich jedoch der zu schaltende Synchronring in seiner Sperrstellung befindet, kommen die Stirnflächen der Zähne der Schiebemuffe in Kontakt mit den Stirnflächen der Zähne des Synchronrings.

Es findet in diesem Zustand die Synchronisierung der Drehzahlen der Schiebemuffe und des zu schaltenden Gangrads statt. Wenn diese abgeschlossen ist, kann der Synchronring mittels der Schiebemuffe derart verdreht werden, dass die Zähne der Schiebemuffe die Zahnlücken des Synchronrings durchgreifen und in Eingriff mit den Zähnen des zu schaltenden Gangrads gebracht werden können.

Dann sind die Schiebemuffe und das Gangrad drehfest gekoppelt. Mit anderen Worten ist ein dem Gangrad zugeordneter Gang eingelegt.

Die Erfindung wird nachstehend anhand eines Ausführungsbeispiels erläutert, das in den beigefügten Zeichnungen gezeigt ist. Es zeigen:
- Figur 1 eine erfindungsgemäße Synchronisierungseinheit in einer Explosionsdarstellung,
- Figur 2 die Synchronisierungseinheit aus Figur 1 in einer Schnittdarstellung,
- Figur 3 zwei Synchronringe und zwei Sperrringe der Synchronisierungseinheit aus den Figuren 1 und 2 in einer isolierten Darstellung,
- Figur 4 einen Schnitt IV-IV der Darstellung aus Figur 3,
- Figur 5 einen Schnitt V-V der Darstellung aus Figur,
- Figur 6 die Synchronisierungseinheit gemäß Figuren 1 und 2 in einer gegenüber der Figur 2 verschiedenen Schnittdarstellung,
- Figur 7 eine gegenüber der Ausführungsform in den Figuren 1 bis 6 alternative Ausführungsform eines Synchronrings der erfindungsgemäßen Synchronisierungseinheit,
- Figur 8 eine teilweise transparente Darstellung der Synchronisierungseinheit aus den Figuren 1 und 2,
- Figur 9 eine Seitenansicht entlang der Richtung IX aus Figur 8 und
- Figur 10 einen Schnitt X-X der Darstellung aus Figur 9.

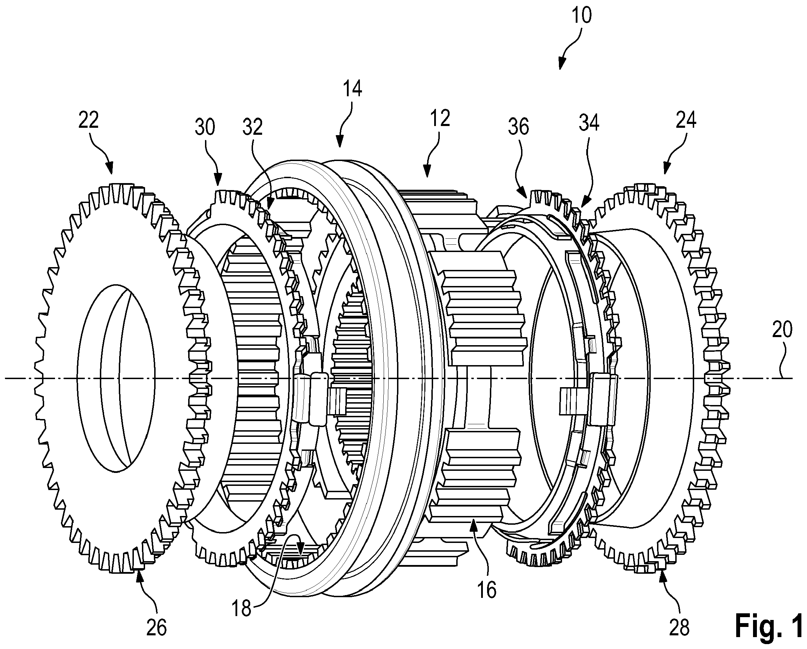

Figur 1 zeigt eine Synchronisierungseinheit 10 für ein Schaltgetriebe.

Diese umfasst eine drehfest und axialfest mit einer Getriebewelle verbindbare Nabe 12, sowie eine mit dieser zusammenwirkende Schiebemuffe 14.

Dabei weist die Nabe 12 eine Außenverzahnung 16 auf, die mit einer Innenverzahnung 18 der Schiebemuffe 14 derart zusammenwirkt, dass die Schiebemuffe 14 drehfest mit der Nabe 12 gekoppelt ist, jedoch in Axialrichtung, d.h. entlang einer Mittelachse 20 der Synchronisierungseinheit 10, gegenüber der Nabe 12 verschoben werden kann.

Die Schiebemuffe 14 kann dabei in zwei axiale Richtungen verschoben werden. Auf diese Weise kann wahlweise ein erster Kupplungskörper 22, dem ein erstes, nicht näher dargestelltes Gangrad zugeordnet ist, oder ein zweiter Kupplungskörper 24, der einem zweiten, nicht näher dargestellten Gangrad zugeordnet ist, drehfest mit der Nabe 12 gekoppelt werden. Mit anderen Worten können mit der Synchronisierungseinheit 10 zwei Gänge geschaltet werden.

Hierfür weist der erste Kupplungskörper 22 eine erste Kupplungskörperverzahnung 26 auf, in die die Innenverzahnung 18 der Schiebemuffe 14 im geschalteten Zustand eingreifen kann.

Der zweite Kupplungskörper 24 hat eine zweite Kupplungskörperverzahnung 28, in die die Innenverzahnung 18 der Schiebemuffe 14 ebenfalls eingreifen kann, wenn ein dem zweiten Kupplungskörper 24 zugeordneter Gang geschaltet ist.

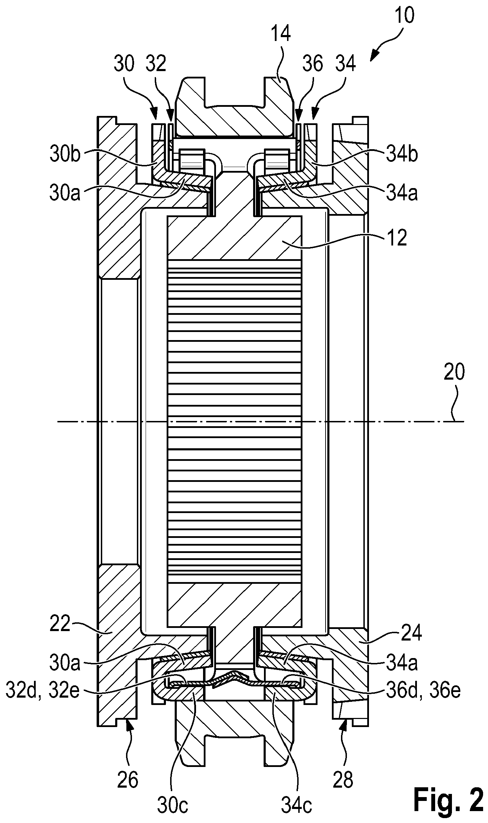

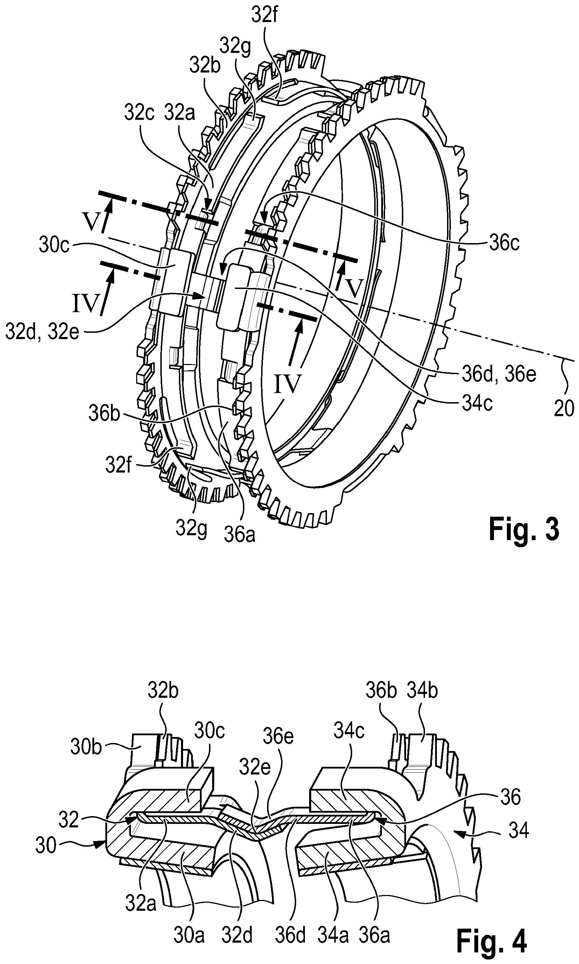

Damit die den beiden Kupplungskörpern 22, 24 zugeordneten Gänge in synchronisierter Weise geschaltet werden können, sind zwischen der Nabe 12 und dem ersten Kupplungskörper 22 ein erster Synchronring 30 und ein erster, diesem zugeordneter Sperrring 32 positioniert. Zwischen der Nabe 12 und dem zweiten Kupplungskörper 24 sind ein zweiter Synchronring 34 und ein diesem zugeordneter, zweiter Sperrring 36 angeordnet (siehe Figuren 2 und 3).

Die Sperrringe 32, 36 sind dabei von den jeweils zugeordneten Synchronringen 30, 34 separat.

Ferner sind die Synchronringe 30, 34 und die Sperrringe 32, 36 koaxial und um die Mittelachse 20 drehbar angeordnet.

In der dargestellten Ausführungsform sind die beiden Sperrringe 32, 36 als Stanzbiegeteile aus Blech gebildet. Zudem sind sie jeweils einstückig und umfangsmäßig geschlossen (vgl. Figuren 3 bis 5).

Jeder der Synchronringe 30, 34 umfasst dabei in bekannter Weise einen Reibkonusabschnitt 30a, 34a und einen Sperrverzahnungsabschnitt 30b, 34b.

Die beiden Sperrringe 32, 36 weisen jeweils einen Lagerabschnitt 32a, 36a auf, wobei der Lagerabschnitt 32a des ersten Sperrrings 32 am ersten Synchronring 30 anliegt. Dem entsprechend liegt der Lagerabschnitt 36a des zweiten Sperrrings 36 am zweiten Synchronring 34 an.

Genauer gesagt, liegt der Lagerabschnitt 32a radial innenseitig an einem Indexnocken 30c des ersten Synchronrings 30 an und der Lagerabschnitt 36a radial innenseitig an einem Indexnocken 34c des zweiten Synchronrings 34.

Darüber hinaus weist jeder der Sperrringe 32, 36 einen Sperrverzahnungsabschnitt 32b, 36b auf.

Dabei liegt der Sperrverzahnungsabschnitt 32b des ersten Sperrrings 32 in Axialrichtung benachbart zum Sperrverzahnungsabschnitt 30b des ersten Synchronrings 30. Der Sperrverzahnungsabschnitt 36b des zweiten Sperrrings 36 ist in Axialrichtung dem Sperrverzahnungsabschnitt 34b des zweiten Synchronrings 34 benachbart angeordnet (siehe insbesondere Figur 2).

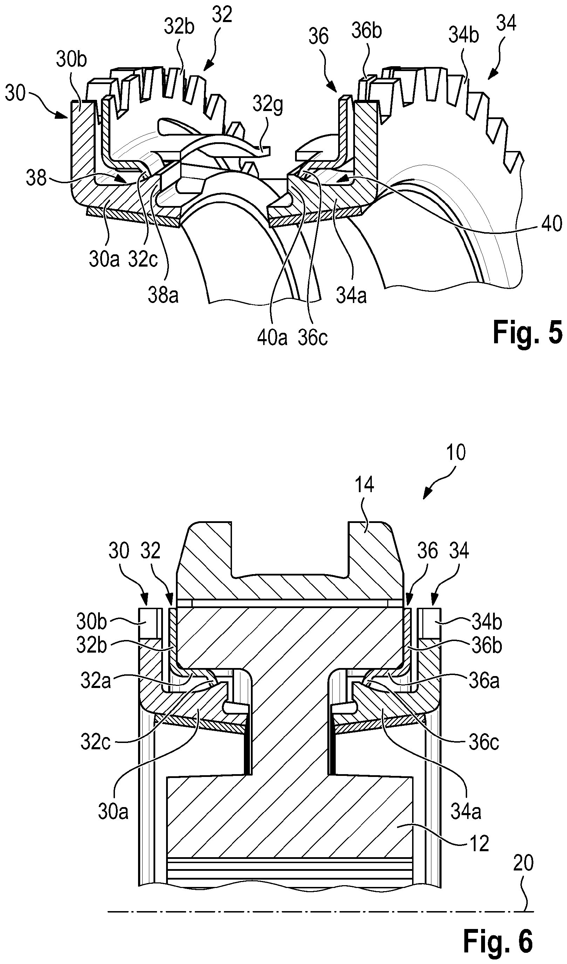

Ferner greift der erste Sperrring 32 in eine Radialaufnahme 38 ein, die am ersten Synchronring 30 vorgesehen ist. Der zweite Sperrring 36 greift in entsprechender Weise in eine Radialaufnahme 40 ein, die am zweiten Synchronring 34 vorgesehen ist (siehe Figuren 5 und 6).

Dabei sind die Radialaufnahmen 38, 40 in der in den Figuren 1 bis 6 dargestellten Ausführungsform jeweils durch einen segmentiert umlaufenden Synchronringbund 38a, 40a gebildet.

Mittels dieses Synchronringbundes 38a, 40a wird ein in Axialrichtung wirkender Hinterschnitt gebildet, in den der jeweils zugeordnete Sperrring 32, 36 eingreift.

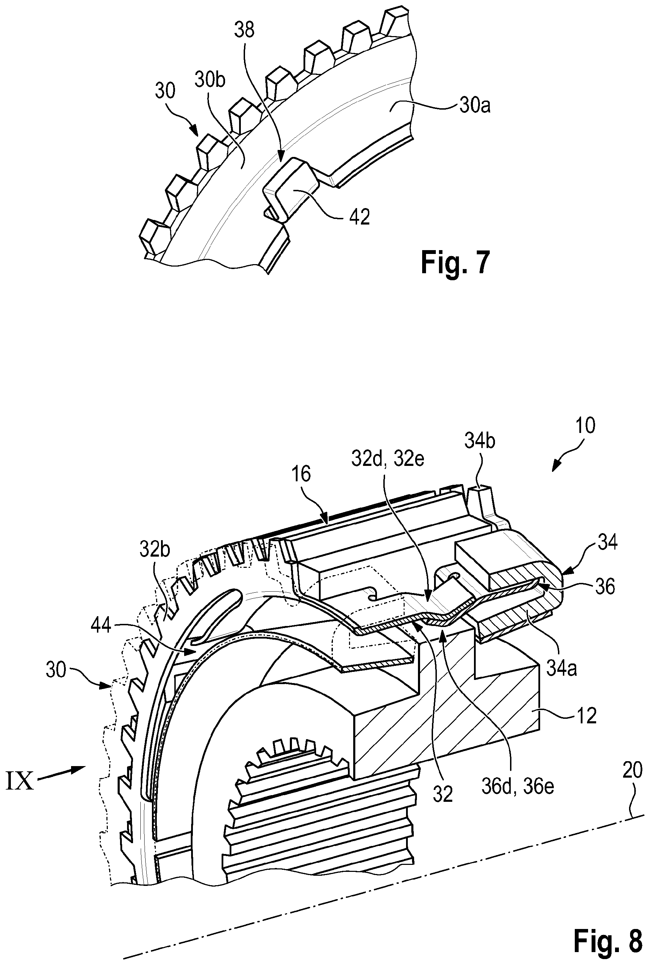

Alternativ zu den segmentiert umlaufenden Synchronringbunden 38a, 40a können die Radialaufnahmen 38, 40 auch durch am jeweils zugeordneten Synchronring 30, 34 vorgesehene Haltenocken 42 gebildet sein. Dies ist in Figur 7 für den ersten Synchronring 30 exemplarisch gezeigt.

An den Sperrringen 32, 36 sind darüber hinaus jeweils Radialvorsprünge 32c, 36c vorgesehen, um in die zugeordneten Radialaufnahmen 38, 40 einzugreifen. Die Radialvorsprünge 32c, 36c sind dabei umfangsmäßig nicht umlaufend.

Somit lassen sich die Sperrringe 32, 36 nach Art eines Bajonettverschlusses auf den zugeordneten Synchronringen 30, 34 montieren. Dafür werden die Sperrringe 32, 36 in Axialrichtung auf den jeweils zugeordneten Synchronring 30, 34 aufgeschoben, wobei die Sperrringe 32, 36 eine Drehlage einnehmen, in der die Radialvorsprünge 32c, 36c in Axialrichtung betrachtet die Segmente der Synchronringbunde 38a, 40a nicht überdecken. Erst wenn die Sperrverzahnungsabschnitte 32b, 36b der Sperrringe 32, 36 an den jeweils zugeordneten Sperrverzahnungsabschnitten 30b, 34b anliegen, werden die Sperrringe 32, 36 derart gegenüber dem zugeordneten Synchronring 30, 34 verdreht, dass die Radialvorsprünge 32c, 36c axial hinter den zugeordneten Segmenten der Synchronringbunde 38a, 40a liegen.

Zusammenfassend sind die Sperrringe 32, 36 also im montierten Zustand in Axialrichtung dadurch am jeweils zugeordneten Synchronring 30, 34 gehalten, dass diese einerseits dem jeweils zugeordneten Sperrverzahnungsabschnitt 30b, 34b benachbart angeordnet sind und andererseits die Radialvorsprünge 32c, 36c die jeweils zugeordneten Synchronringbunde 38a, 40a in Axialrichtung hintergreifen.

Darüber hinaus findet über die Radialvorsprünge 32c, 36c im Bereich der jeweils zugeordneten Radialaufnahmen 38, 40 auch eine radiale Lagerung der Sperrringe 32, 36 am jeweils zugeordneten Synchronring 30, 34 statt.

Außerdem sind die Sperrringe 32, 36 in Axialrichtung miteinander gekoppelt.

Dafür sind am Umfang des ersten Sperrrings 32 insgesamt drei Laschen 32d vorgesehen, die im Wesentlichen in Axialrichtung vom ersten Sperrring 32 in Richtung des zweiten Sperrrings 36 abstehen.

Am zweiten Sperrring 36 sind ebenfalls Laschen 36d vorgesehen, die ausgehend vom zweiten Sperrring 36 im Wesentlichen in Axialrichtung in Richtung des ersten Sperrrings 32 abstehen.

Die Kopplung der Sperrringe 32, 36 erfolgt dabei durch eine Kopplung der Laschen 32d, 36d.

An der Lasche 32d des ersten Sperrrings 32 ist dabei eine Radialaufnahme 32e vorgesehen, in die ein Radialvorsprung 36e des zweiten Sperrrings 36 eingreift.

Sowohl die Radialaufnahme 32e als auch der Radialvorsprung 36e sind dabei V-förmig, wenn sie in Umfangsrichtung betrachtet werden (siehe insbesondere Figuren 4 und 8).

Nachdem die Sperrringe 32, 36 im dargestellten Ausführungsbeispiel als Stanzbiegeteile aus Blech ausgeführt sind, sind die Radialaufnahme 32e und der Radialvorsprung 36e vorliegend jeweils als V-förmiger, umgeformte Abschnitt der zugeordneten Laschen 32d, 36d ausgeführt. Die V-Form ist dabei jeweils nach radial außen geöffnet.

Ferner sind die Laschen 32d, 36d in Radialrichtung mit einer gewissen Elastizität ausgestattet, sodass im Zuge einer Montage der Synchronisierungseinheit 10 die beiden Laschen 32d, 36d in Axialrichtung aufeinander zu geschoben werden können, wobei die Radialaufnahme 32e und der Radialvorsprung 36e unter Ausnutzung der Elastizität miteinander in Eingriff kommen.

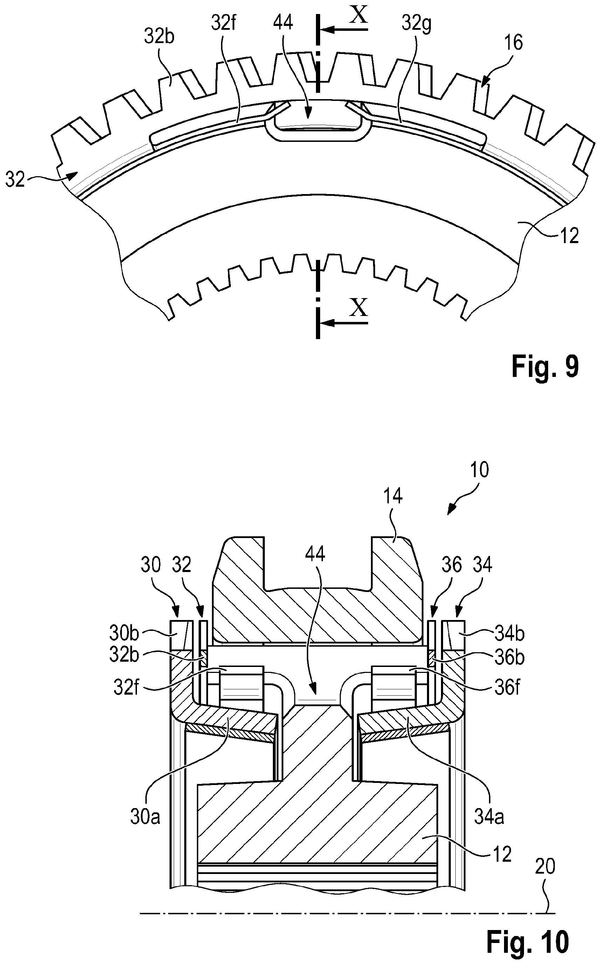

Die Sperrringe 32, 36 sind darüber hinaus mit der Nabe 12 gekoppelt (vgl. Figuren 8 bis 10).

Dafür sind über den Umfang der Nabe 12 verteilt mehrere Nabenaussparungen 44 vorgesehen, in die jeweils zwei Positionierungsabschnitte 32f, 32g, 36f, 36g jedes Sperrrings 32, 36 von radial innen eingreifen.

In der dargestellten Ausführungsform sind die Positionierungsabschnitte 32f, 32g, 36f, 36g als Federzungen ausgeführt.

Dabei sind die Positionierungsabschnitte 32f, 36f einer ersten Drehrichtung zugeordnet und die Positionierungsabschnitte 32g, 36g einer entgegengesetzten, zweiten Drehrichtung.

Auf diese Weise sind die Sperrringe 32, 36 umfangsmäßig an der Nabenaussparung 44 positioniert, wenn sich die Synchronisierungseinheit 10 in der Neutralposition befindet.

Die Synchronisierungseinheit 10 funktioniert folgendermaßen.

In einer Neutralstellung greifen alle Positionierungsabschnitte 32f, 32g, 36f, 36g in die jeweils zugeordnete Nabenaussparung 44 ein.

In diesem Zustand liegen die Zähne der Sperrverzahnungsabschnitte 32b, 36b zumindest abschnittsweise vor den Zähnen der Innenverzahnung 18 der Schiebemuffe 14. Somit ist eine Bewegung der Schiebemuffe 14 in axialer Richtung durch die Sperrringe 32, 36 gesperrt. Anders gesagt sind die Sperrringe 32, 36 in ihrer Sperrstellung.

Wird nun die Schiebemuffe 14 in Axialrichtung beispielsweise in Richtung des ersten Kupplungskörpers 22 mit einer Betätigungskraft beaufschlagt, so wird zunächst eine axiale Bewegung der Schiebemuffe 14 durch den Sperrring 32 unterbunden.

Allerdings wird durch die Betätigung der Schiebemuffe 14 der Sperrring 32 in Richtung des zugeordneten ersten Synchronrings 30 verlagert, sodass der Reibkonusabschnitt des ersten Synchronrings 30 derart in Richtung des ersten Kupplungskörpers 22 verschoben wird, dass er mit dem Reibkonusabschnitt des ersten Kupplungskörpers 22 in Kontakt kommt. Dies bewirkt, dass sich der Synchronring 30 in seine Sperrstellung verdreht.

Man spricht bei diesem Vorgang auch von einer Vorsynchronisierung.

Erst wenn die Betätigungskraft der Schiebemuffe 14 derart groß ist, dass der der vorliegenden Drehrichtung zugeordnete Positionierungsabschnitt 32f, 32g derart elastisch verformt wird, dass er die zugeordnete Nabenaussparung 44 verlässt, verdreht sich der Sperrring 32 relativ zur Schiebemuffe 14. Dadurch können die Zähne des Sperrverzahnungsabschnitt 32b in die Zahnlücken der Innenverzahnung 18 der Schiebemuffe 14 eingreifen.

Um das Verdrehen des Sperrrings 32 zu erleichtern, können zumindest einige Zähne der Innenverzahnung 18 der Schiebemuffe 14 konvexe oder ballige Stirnflächen aufweisen.

Zudem können die Zähne des Sperrverzahnungsabschnitts 32b des Sperrrings 32 in der Sperrstellung gegenüber den Zähnen der Innenverzahnung 18 der Schiebemuffe 14 außermittig angeordnet sein. Eine umfangsmäßige Mitte der Zähne der Innenverzahnung 18 der Schiebemuffe 14 liegt also umfangsmäßig gegenüber einer umfangsmäßigen Mitte eines gegenüberliegenden Zahns des Sperrverzahnungsabschnitts 32b versetzt. Auch so lässt sich das Verdrehen des Sperrrings 32 erleichtern.

Nachdem der Synchronring 30 jedoch in seiner Sperrstellung ist, liegen dann die axialen Stirnseiten der Zähne der Innenverzahnung 18 der Schiebemuffe 14 an gegenüberliegenden axialen Stirnseiten der Zähne des Sperrverzahnungsabschnitts 30b des Synchronrings 30 an. Es liegt somit eine sogenannte Sperrstellung der Synchronisierungseinheit 10 vor.

Sobald die Drehzahlen der Nabe 12 und des ersten Kupplungskörpers 22 aneinander angeglichen sind, ist es möglich, mittels einer weiteren axialen Betätigung der Schiebemuffe 14 den Synchronring 30 aus seiner Sperrstellung in eine zugeordnete Freigabestellung zu verdrehen, sodass die Zähne des Sperrverzahnungsabschnitt 30b des Synchronrings 30 in Zahnlücken der Innenverzahnung 18 der Schiebemuffe 14 eingreifen können. Dann kann die Innenverzahnung 18 der Schiebemuffe 14 mit der Kupplungskörperverzahnung 26 des ersten Kupplungskörpers 22 in Eingriff gebracht werden.

Damit ist der dem Kupplungskörper 22 zugeordnete Gang eingelegt.

Eine Betätigung der Schiebemuffe 14 in Richtung des zweiten Kupplungskörpers 24 erfolgt analog, sodass auf eine gesonderte Beschreibung verzichtet wird.

Mittels des zweiten Kupplungskörpers 24 wird ein dem zweiten Kupplungskörper 24 zugeordneter Gang eingelegt.

## Patentansprüche

1. Synchronisierungseinheit (10) für ein Schaltgetriebe, mit
einem ersten Synchronring (30) und einem zweiten Synchronring (34), sowie
einem von den Synchronringen (30, 34) separaten, ersten Sperrring (32), der dem ersten Synchronring (30) zugeordnet ist, und einem von den Synchronringen (30, 34) separaten, zweiten Sperrring (36), der dem zweiten Synchronring (34) zugeordnet ist,
wobei der erste Synchronring (30), der zweite Synchronring (34), der erste Sperrring (32) und der zweite Sperrring (36) koaxial und um eine Mittelachse (20) der Synchronisierungseinheit (10) drehbar angeordnet sind und der erste Sperrring (32) in Axialrichtung mit dem zweiten Sperrring (36) gekoppelt ist.

2. Synchronisierungseinheit (10) nach Anspruch 1, **dadurch gekennzeichnet, dass** die Sperrringe (32, 36) über zumindest eine vom ersten Sperrring (32) in Richtung des zweiten Sperrrings (36) abstehende Lasche (32d) und über zumindest eine vom zweiten Sperrring (36) in Richtung des ersten Sperrrings (32) abstehende Lasche (36d) gekoppelt sind.

3. Synchronisierungseinheit (10) nach Anspruch 2, **dadurch gekennzeichnet, dass** die Laschen (32d, 36d) im Wesentlichen in Axialrichtung vom jeweils zugeordneten Sperrring (32, 36) abstehen, wobei eine der Laschen (32d, 36d) eine Radialaufnahme (32e) aufweist und die andere der Laschen (32d, 36d) einen Radialvorsprung (36e), wobei der Radialvorsprung (36e) in die Radialaufnahme (32e) eingreift.

4. Synchronisierungseinheit (10) nach Anspruch 2 oder 3, **dadurch gekennzeichnet, dass** die Radialaufnahme (32e) und/oder der Radialvorsprung (36e) in Umfangsrichtung betrachtet V-förmig ist bzw. sind.

5. Synchronisierungseinheit (10) nach einem der vorhergehenden Ansprüche, **dadurch gekennzeichnet, dass** der erste Sperrring (32) und der zweite Sperrring (36) als Stanzbiegeteile aus Blech gebildet sind.

6. Synchronisierungseinheit (10) nach einem der vorhergehenden Ansprüche, **dadurch gekennzeichnet, dass** der erste Sperrring (32) und der zweite Sperrring (36) jeweils einstückig und/oder umfangsmäßig geschlossen sind.

7. Synchronisierungseinheit (10) nach einem der vorhergehenden Ansprüche, **dadurch gekennzeichnet, dass** jeder der Synchronringe (30, 34) einen Reibkonusabschnitt (30a, 34a) und einen Sperrverzahnungsabschnitt (30b, 34b) aufweist und jeder der Sperrringe (32, 36) einen Sperrverzahnungsabschnitt (32b, 36b) und einen Lagerabschnitt (32a, 36a) umfasst,
wobei der Sperrverzahnungsabschnitt (32b) des ersten Sperrrings (32) in Axialrichtung dem Sperrverzahnungsabschnitt (30b) des ersten Synchronrings (30) benachbart angeordnet ist und der Sperrverzahnungsabschnitt (36b) des zweiten Sperrrings (36) in Axialrichtung dem Sperrverzahnungsabschnitt (34b) des zweiten Synchronrings (34) benachbart angeordnet ist und/oder
wobei der Lagerabschnitt (32a) des ersten Sperrrings (32) am ersten Synchronring (30) anliegt und der Lagerabschnitt (36a) des zweiten Sperrrings (36) am zweiten Synchronring (34) anliegt.

8. Synchronisierungseinheit (10) nach einem der vorhergehenden Ansprüche, **dadurch gekennzeichnet, dass** der erste Sperrring (32) in eine am ersten Synchronring (30) vorgesehen Radialaufnahme (38) eingreift und der zweite Sperrring (36) in eine am zweiten Synchronring (34) vorgesehen Radialaufnahme (40) eingreift.

9. Synchronisierungseinheit (10) nach Anspruch 8, **dadurch gekennzeichnet, dass** jeder der Sperrringe (32, 36) einen Radialvorsprung (32c, 36c) aufweist und mittels des Radialvorsprungs (32c, 36c) in die jeweils zugeordnete Radialaufnahme (38, 40) eingreift.

10. Synchronisierungseinheit (10) nach Anspruch 8 oder 9, **dadurch gekennzeichnet, dass** die Radialaufnahmen (38, 40) jeweils durch einen vollständig oder segmentiert umlaufenden Synchronringbund (38a, 40a) gebildet sind.

11. Synchronisierungseinheit (10) nach Anspruch 8 oder 9, **dadurch gekennzeichnet, dass** die Radialaufnahmen (38, 40) jeweils durch einen am zugeordneten Synchronring (30, 34) vorgesehenen Haltenocken (42) gebildet sind.

12. Synchronisierungseinheit (10) nach einem der vorhergehenden Ansprüche, **dadurch gekennzeichnet, dass** eine Nabe (12) vorgesehen ist und in Neutralposition ein Positionierungsabschnitt (32f, 32g, 36f, 36g) jedes Sperrrings (32, 36) zur umfangsmäßigen Positionierung in eine Nabenaussparung (44) eingreift.

13. Synchronisierungseinheit (10) nach Anspruch 12, **dadurch gekennzeichnet, dass** der Positionierungsabschnitt (32f, 32g, 36f, 36g) eine Federzunge umfasst, insbesondere wobei die Federzunge von radial Innen in die zugeordnete Nabenaussparung (44) eingreift.

14. Synchronisierungseinheit (10) nach Anspruch 12 oder 13, **dadurch gekennzeichnet, dass** an jedem Sperrring (32, 36) zwei Positionierungsabschnitte (32f, 32g, 36f, 36g) zur umfangsmäßigen Positionierung des Sperrrings (32, 36) in jeweils entgegengesetzte Drehrichtungen vorgesehen sind und die Positionierungsabschnitte (32f, 32g, 36f, 36g) in eine gemeinsame Nabenaussparung (44) eingreifen.

## Geänderte Patentansprüche

### Geänderte Patentansprüche gemäss Regel 137(2) EPÜ.

1. Synchronisierungseinheit (10) für ein Schaltgetriebe, mit einem ersten Synchronring (30) und einem zweiten Synchronring (34), sowie einem von den Synchronringen (30, 34) separaten, ersten Sperrring (32), der dem ersten Synchronring (30) zugeordnet ist, und einem von den Synchronringen (30, 34) separaten, zweiten Sperrring (36), der dem zweiten Synchronring (34) zugeordnet ist,
wobei der erste Synchronring (30), der zweite Synchronring (34), der erste Sperrring (32) und der zweite Sperrring (36) koaxial und um eine Mittelachse (20) der Synchronisierungseinheit (10) drehbar angeordnet sind,
**dadurch gekennzeichnet, dass** der erste Sperrring (32) in Axialrichtung mit dem zweiten Sperrring (36) gekoppelt ist.

2. Synchronisierungseinheit (10) nach Anspruch 1, **dadurch gekennzeichnet, dass** die Sperrringe (32, 36) über zumindest eine vom ersten Sperrring (32) in Richtung des zweiten Sperrrings (36) abstehende Lasche (32d) und über zumindest eine vom zweiten Sperrring (36) in Richtung des ersten Sperrrings (32) abstehende Lasche (36d) gekoppelt sind.

3. Synchronisierungseinheit (10) nach Anspruch 2, **dadurch gekennzeichnet, dass** die Laschen (32d, 36d) im Wesentlichen in Axialrichtung vom jeweils zugeordneten Sperrring (32, 36) abstehen, wobei eine der Laschen (32d, 36d) eine Radialaufnahme (32e) aufweist und die andere der Laschen (32d, 36d) einen Radialvorsprung (36e), wobei der Radialvorsprung (36e) in die Radialaufnahme (32e) eingreift.

4. Synchronisierungseinheit (10) nach Anspruch 2 oder 3, **dadurch gekennzeichnet, dass** die Radialaufnahme (32e) und/oder der Radialvorsprung (36e) in Umfangsrichtung betrachtet V-förmig ist bzw. sind.

5. Synchronisierungseinheit (10) nach einem der vorhergehenden Ansprüche, **dadurch gekennzeichnet, dass** der erste Sperrring (32) und der zweite Sperrring (36) als Stanzbiegeteile aus Blech gebildet sind.

6. Synchronisierungseinheit (10) nach einem der vorhergehenden Ansprüche, **dadurch gekennzeichnet, dass** der erste Sperrring (32) und der zweite Sperrring (36) jeweils einstückig und/oder umfangsmäßig geschlossen sind.

7. Synchronisierungseinheit (10) nach einem der vorhergehenden Ansprüche, **dadurch gekennzeichnet, dass** jeder der Synchronringe (30, 34) einen Reibkonusabschnitt (30a, 34a) und einen Sperrverzahnungsabschnitt (30b, 34b) aufweist und jeder der Sperrringe (32, 36) einen Sperrverzahnungsabschnitt (32b, 36b) und einen Lagerabschnitt (32a, 36a) umfasst,
wobei der Sperrverzahnungsabschnitt (32b) des ersten Sperrrings (32) in Axialrichtung dem Sperrverzahnungsabschnitt (30b) des ersten Synchronrings (30) benachbart angeordnet ist und der Sperrverzahnungsabschnitt (36b) des zweiten Sperrrings (36) in Axialrichtung dem Sperrverzahnungsabschnitt (34b) des zweiten Synchronrings (34) benachbart angeordnet ist und/oder
wobei der Lagerabschnitt (32a) des ersten Sperrrings (32) am ersten Synchronring (30) anliegt und der Lagerabschnitt (36a) des zweiten Sperrrings (36) am zweiten Synchronring (34) anliegt.

8. Synchronisierungseinheit (10) nach einem der vorhergehenden Ansprüche, **dadurch gekennzeichnet, dass** der erste Sperrring (32) in eine am ersten Synchronring (30) vorgesehen Radialaufnahme (38) eingreift und der zweite Sperrring (36) in eine am zweiten Synchronring (34) vorgesehen Radialaufnahme (40) eingreift.

9. Synchronisierungseinheit (10) nach Anspruch 8, **dadurch gekennzeichnet, dass** jeder der Sperrringe (32, 36) einen Radialvorsprung (32c, 36c) aufweist und mittels des Radialvorsprungs (32c, 36c) in die jeweils zugeordnete Radialaufnahme (38, 40) eingreift.

10. Synchronisierungseinheit (10) nach Anspruch 8 oder 9, **dadurch gekennzeichnet, dass** die Radialaufnahmen (38, 40) jeweils durch einen vollständig oder segmentiert umlaufenden Synchronringbund (38a, 40a) gebildet sind.

11. Synchronisierungseinheit (10) nach Anspruch 8 oder 9, **dadurch gekennzeichnet, dass** die Radialaufnahmen (38, 40) jeweils durch einen am zugeordneten Synchronring (30, 34) vorgesehenen Haltenocken (42) gebildet sind.

12. Synchronisierungseinheit (10) nach einem der vorhergehenden Ansprüche, **dadurch gekennzeichnet, dass** eine Nabe (12) vorgesehen ist und in Neutralposition ein Positionierungsabschnitt (32f, 32g, 36f, 36g) jedes Sperrrings (32, 36) zur umfangsmäßigen Positionierung in eine Nabenaussparung (44) eingreift.

13. Synchronisierungseinheit (10) nach Anspruch 12, **dadurch gekennzeichnet, dass** der Positionierungsabschnitt (32f, 32g, 36f, 36g) eine Federzunge umfasst, insbesondere wobei die Federzunge von radial Innen in die zugeordnete Nabenaussparung (44) eingreift.

14. Synchronisierungseinheit (10) nach Anspruch 12 oder 13, **dadurch gekennzeichnet, dass** an jedem Sperrring (32, 36) zwei Positionierungsabschnitte (32f, 32g, 36f, 36g) zur umfangsmäßigen Positionierung des Sperrrings (32, 36) in jeweils entgegengesetzte Drehrichtungen vorgesehen sind und die Positionierungsabschnitte (32f, 32g, 36f, 36g) in eine gemeinsame Nabenaussparung (44) eingreifen.
